# EUROPEAN PATENT APPLICATION

(11) **EP 2 093 678 A1**
(43) Date of publication of application: **26.08.2009**
(21) Application number: 08250616.3
(22) Date of filing: 21.02.2008
(51) Int. Cl.: G06F 17/30

(54) **Data network**

(71) Applicant: British Telecommunications public limited company, 81 Newgate Street London EC1A 7AJ (GB)
(72) Inventor: Lucas, Peter Harold, Fleet, Hampshire GU52 6LR (GB); Lock, Gordon David, Hook, Hampshire RG27 9LP (GB); Shahi, Narvinder Singh, Southhall, Middlesex UB2 4HP (GB)
(74) Representative: Nash, Roger William

(57) **Abstract**

A data network in which data from sensors is collected by local data servers and transmitted to a global data server. A number of virtual servers hold subsets of data from the global data server. Domains of data clients have access to a virtual server such that data clients may not access data to which they do not have permission to access.

## Description

The present invention relates to data network and in particular to a network for transmitting data generated by monitoring sensors.

As manufacturing and production processes have become increasingly automated, there has been a need to capture the data that is produced by sensors or reported by production components. Initially there were difficulties encountered in implementing such schemes as sensors and apparatus from different manufacturers were not compatible with each other. This lead to the unsatisfactory situation were it might be necessary to only source such equipment from a single supplier or to provide a number of different monitoring networks with each being compatible with equipment from a different supplier.

To address these issues, the OPC standard (OLE [Object-Linking & Embedding] for Process Control) was developed, which details the data structures to be used when transmitting real time data in production and manufacturing processes. OPC servers are able to access data from OPC compliant devices; they also provide a common interface such that applications may access the data held on the servers for the purposes of process management and monitoring. Examples of OPC related technology are to be found in EP1121626 and US 2005/0038885.

According to a first aspect of the present invention there is provided a data network comprising one or more data producing domains, one or more data consuming domains and a core platform; the or each data producing domains comprising one or more data servers and the or each data server being in communication with one or more data sources; the or each data consuming domains comprising one or more data clients: the core platform comprising a global data server and one or more virtual data servers wherein; i) the global data server and the or each virtual data servers being in communication with the or each data producing domains and the or each data consuming domains; and ii): the or each virtual data server is associated with one of the or each data consuming domains; wherein, in use, a) data from the one or more data servers are transmitted to the global data server; b) selected data subsets from the global data server are written to the or each virtual data server; and c) each data client can access the data held in the virtual data server associated with the respective data consuming domain.

In a particular embodiment of the invention, the one or more servers comprise OPC servers, the one or more data sources comprise OPC compliant data sources, the one or more data clients comprise OPC clients and each of the global data server and the or each virtual data servers comprise an OPC server.

The present invention enables multiple, diverse organisations to share a common infrastructure over which process control data can be collected and delivered. Collection and delivery of data is optimised such that data collection frequency and data values (tags) collected can be dynamically tuned to meet aggregate demand for specific units of data. Furthermore, the present invention allows real time operational data to be securely shared with remote operations centres, partners, 3^{rd} parties, etc..

All of the registered data sources are held within the global server, which can not be viewed by any user. Each user may only see a subset of the global server, which is defined by the data held within one of the virtual servers. A virtual server represents all of the data tags that a user has been granted the rights to read. These data tags may be subscribed to and data values can be delivered to a user on demand.

The present invention provides the ability to request authorised data from multiple organisations and multiple data sources and to have that data delivered, on demand, without having to understand where the data sources are or having to configure access to those data sources. The invention also enables a consumer user role (referred to as an ad hoc consumer) to be defined, create a Virtual OPC server for that user and define subscriptions for that user for which data is then streamed and stored awaiting later collection. The actual user who will assume the role may be appointed after that data collection has begun. An ad hoc consumer may then securely connect to the service from anywhere and access the data that belongs to their role.

The present invention is believed to be of use in the gas and oil industries. All oil platforms and operational facilities monitor and control key assets through the use of specialist Process Information sensors. These sensors send real time data (typically in the form of OPC data tags) to a local data store (referred to as a data historian) and enable the safe and efficient operation of each facility. There are currently no suitable methods for sharing "tag" data beyond the local Data Historian environment. Oil Companies are struggling to address the issues of complexity, lead times, security and the high costs associated with sharing live oil field data. The lack of integration and data sharing has a significant negative impact on asset performance and operational efficiency.

The present invention provides a common industry wide platform which enables organisations to share real time monitoring data. The complexity of the current mesh of connections with associated management and security issues is replaced by a simple logical hub that provides connectivity, management and security as a network service. The invention relates generally to the self managed distribution of data over a common infrastructure. The specific example used to describe the invention relates to the distribution of process control data as derived from OPC servers (where OPC stands for Object Linking and Embedding for Process Control) using one of the standard communication protocols as defined by the OPC Foundation.

According to a second aspect of the present invention there is provided a method of operating a data network, the data network comprising one or more data producing domains, one or more data consuming domains and a core platform, wherein the or each data producing domains comprise one or more data servers and the or each data server are in communication with one or more data sources; the or each data consuming domains comprise one or more data clients and the core platform comprising a global data server and one or more virtual data servers i) the global data server and the or each virtual data servers are in communication with the or each data producing domains and the or each data consuming domains; and ii) the or each virtual data server is associated with one of the or each data consuming domains; the method comprising the steps of: a) transmitting data from one or more of the data servers to the global data server; b) writing selected data subsets from the global data server to the or each virtual data server; and c) enabling each data client to access the data held in the virtual data server associated with the respective data consuming domain.

According to a third aspect of the present invention there is provided a computer program product, comprising computer executable code for performing a method as described above.

Embodiments of the present invention will now be described, by way of example only, with reference to the accompanying drawings in which:
Figure 1a is a schematic depiction of a conventional arrangement;
Figure 1b shows a schematic depiction of an arrangement in accordance with the present invention;
Figure 2 shows a schematic depiction of the operation of the arrangement described above with reference to Figure 1 b;
Figure 3 represents a schematic depiction of the connectivity provided between an OPC server and an OPC client;
Figure 4 shows a schematic depiction of the processes by which data is transmitted from OPC servers to a global core OPC server;
Figure 5 shows a schematic depiction of the process by which OPC clients can subscribe to the data held in an associated virtual core OPC server; and
Figure 6 shows a schematic depiction of how the process described above with reference to Figure 5 can be updated.

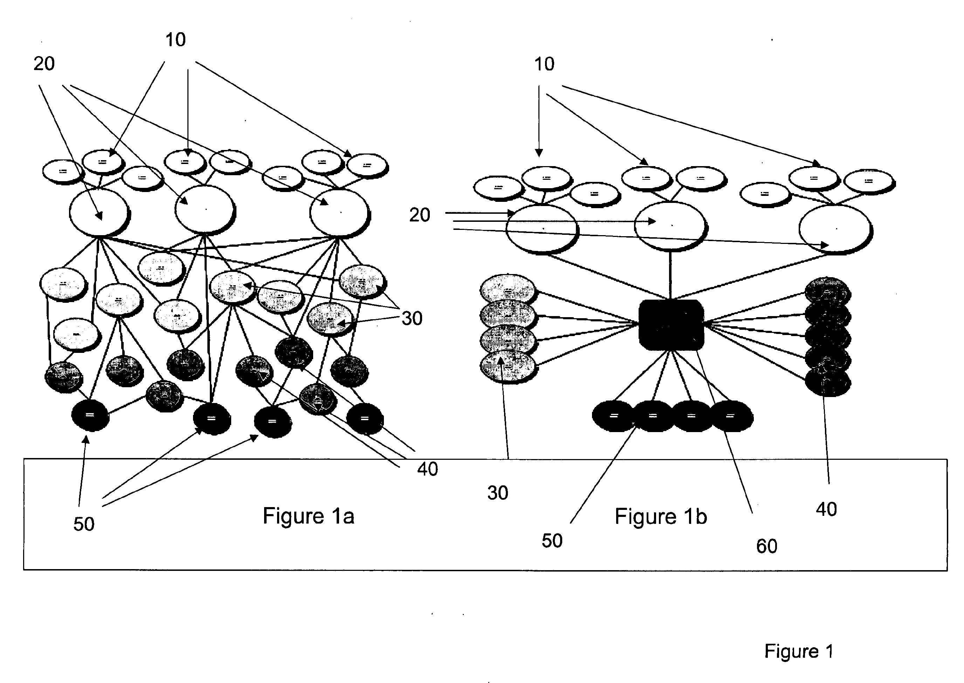

Figure 1a is a schematic depiction of a conventional arrangement in which a plurality of sensor domains 10 are connected to a respective OPC server 20. Each of the OPC servers is connected to in turn to a mesh network which comprises production and management systems from a number of different organisations 30, 40 & 50. Figure 1b shows a schematic depiction of an arrangement in accordance with the present invention in which the OPC servers 20 are connected to a central data platform 60. The production and management systems from a number of different organisations 30, 40 & 50 are also connected to the central data platform 60 in order to receive the appropriate data collected from the sensor domains 10.

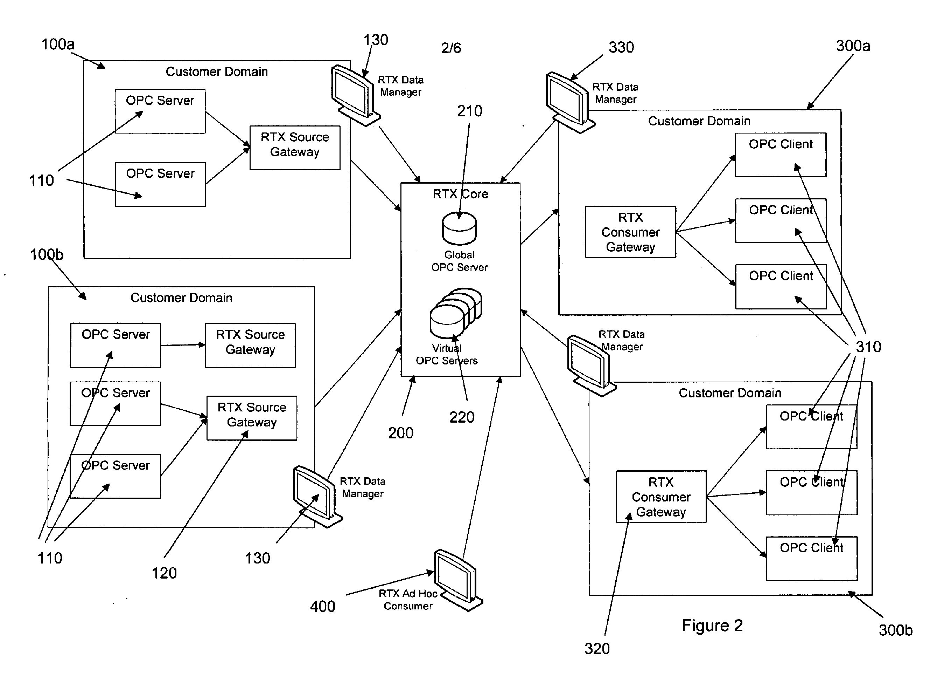

Figure 2 shows a schematic depiction of the operation of the arrangement described above with reference to Figure 1b. Each of a number of source domains 100a, 100b comprises one or more OPC servers 110 and one or more source gateways 120. Each of the OPC servers is in turn connected to one or more sensors (not shown) which transmit OPC conformant data to the OPC servers. Each of the OPC servers are also connected to a source gateway within it's respective source domains. Each of the source domains further comprise a source data manager 130 which is in communication with a core platform 200. The source gateways 120 are also in communication with the core platform 200. By providing a plurality of source gateways 120 it is possible for one domain to incorporate OPC servers that are geographically diversely located.

The core platform comprises a global core OPC server 210 and a plurality of virtual core OPC servers 220. Data received from the sensors via the source domains 100 is received by the global core OPC server. Each of the virtual core OPC servers has access to partitions of the data held on the global core OPC server, such that OPC clients in a plurality of consumer domains may access only the data to which they are entitled to have access.

The core platform 200 is also in communication with one or more consumer domains 300a, 300b. Each of the consumer domains comprise a consumer data manager 330, one or more consumer gateways 320 and one or more OPC clients 310. Each of the OPC clients is connected to a consumer gateway 320. Figure 2 also shows an ad hoc data consumer 400 which is in communication with the core platform 200.

Figure 2 shows that each of the source and consumer domains comprise a respective data manager. It should be understood that each domain may comprise more than one data manager. In an alternative, a domain may not comprise a data manager but in such a case a data manager from a further domain must be appointed to manage that domain. It should be noted that the data managers for both the source and the consumer domains merely represent different instances of the role of data manager, with each data manager managing their own virtual core OPC server and is responsible for granting rights on this to other customers/users. It should be understood that Figure 2 illustrates only the logical deployment of such a system and does not imply any structural limitation.

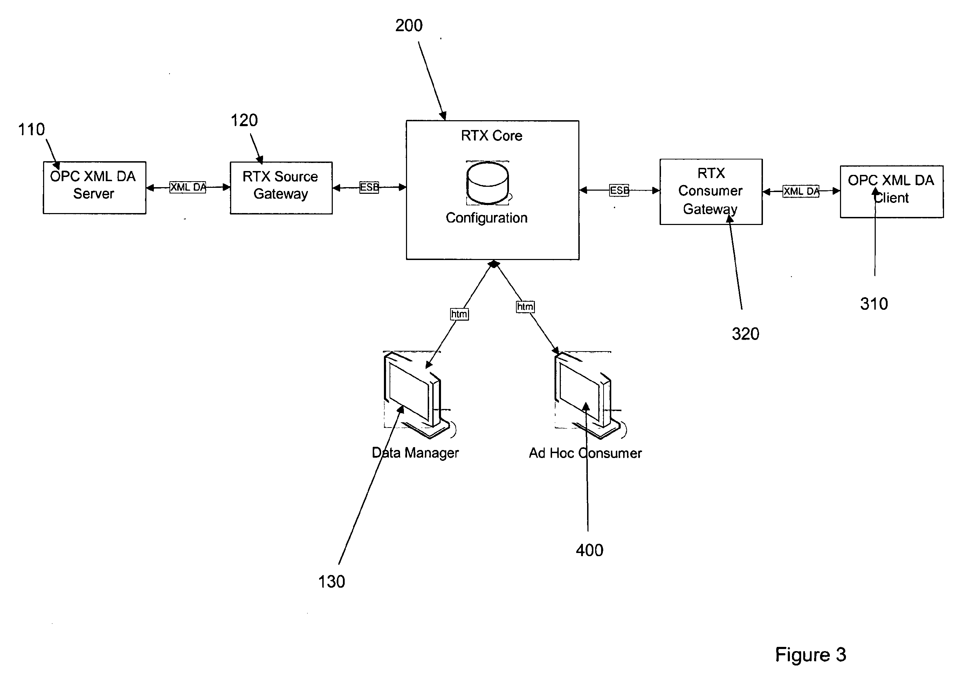

Figure 3 represents a schematic depiction of the connectivity provided between an OPC server 110 and an OPC client 310. The OPC server is connected to the source gateway 120, preferably using the OPC XML (extensible mark-up language) DA (data access) protocol, and the connection between the source gateway 130 and the core platform 200 is preferably made using an ESB (enterprise service bus). Similarly, the connection between the core platform 200 and the consumer gateway 320 is preferably made using an ESB and the connection between the consumer gateway and the OPC client is preferably made using OPC XML DA. It will be understood that other transmission protocols or technologies may be used; for example OPC XML DA may be replaced using DCOM. Data managers (either source or consumer data managers 130, 330) and ad hoc consumers (see below) may make connections to the core platform 200 using HTML over HTTP (or HTTPS) or other suitable protocols.

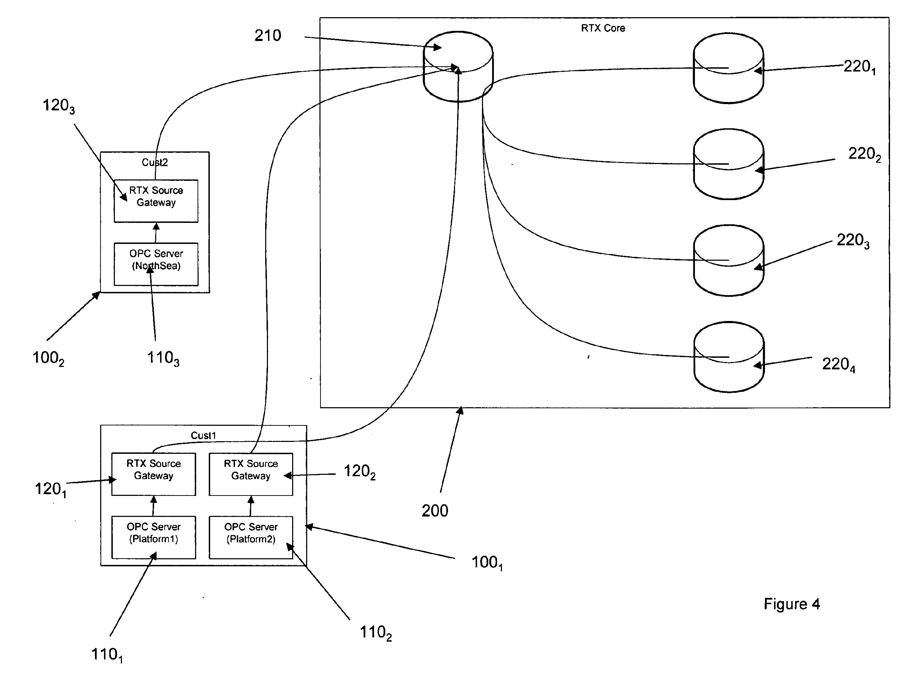

Figure 4 shows a schematic depiction of the processes by which data is transmitted from OPC servers to a global core OPC server. Figure 4 shows an arrangement in which a first source domain 100, (which is operated by a first customer) comprises first and second OPC servers 110₁ & 110₂, named Platform₁ & Platform2 respectively. The first source domain 110₁ comprises first and second respective source gateways 120₁ 120₂. Both of the first and second source gateways are in communication with the global core server 200. A second source domain 100₂ (which is operated by a second customer) comprises a third OPC server 110₃, named NorthSea, and a third source gateway 120₃: the NorthSea OPC server 110₃ is in communication with the third source gateway 120₃ which, in turn, is in communication with the global core server 200.

Each of the sensors associated with the OPC servers has a identifier so that the OPC tags associated with each OPC server can be uniquely identified. By combining these tags with an identifier for the OPC server and customer it is possible to generate a unique tag identifier across the entire network. Table 1 below summarises the different tag IDs that are associated with each of the OPC servers shown in Figure 4 and Table 2 shows the unique identifiers that are used within the global core OPC server to identify each of the tags.

**Table 1: List of Tag IDs for each OPC server**

| **OPC Server ID** | **Tag ID** |
|---|---|
| Platform1 | Plant.item.01 |
| | Plant.item.02 |
| | Plant.item.03 |
| | Pump.alpha |
| | Pump.beta |
| Platform2 | Riser.A |
| | Riser. B |
| | Riser.C |
| NorthSea | Prod |
| | Temp |
| | Pressure |

**Table 2: List of Tag IDs for Global Core OPC server**

| **Global Core OPC Server ID** | **Tag ID** |
|---|---|
| Cust1.Platform1.Plant.item.01 | Plant.item.01 |
| Cust1.Platform1.Plant.item.02 | Plant.item.02 |
| Cust1.Platform1.Plant.item.03 | Plant.item.03 |
| Cust1.Platform1.Pump.alpha | Pump.alpha |
| Cust1.Platform1.Pump.beta | Pump.beta |
| Cust1.Platform2.Riser.A | Riser.A |
| Cust1.Platform2.Riser.B | Riser.B |
| Cust1.Platform2.Riser.C | Riser.C |
| Cust2.NorthSea.Prod | Prod |
| Cust2.NorthSea.Temp | Temp |
| Cust2.NorthSea.Pressure | Pressure |

In order to allow access to the data held on the global core OPC server, a number of virtual core OPC server are created. Each of these virtual core OPC servers contain a subset of the data held by the global core OPC server. In this way, it is possible for the data held by the global core OPC server to be partitioned such that users can only access the data that they have permission to and are not able to view or access other data held on the global core OPC server. Each virtual core OPC server allows OPC clients from the respective consumer domain to access and view all of the OPC data referenced in that virtual core OPC server. Also, each of the consumer gateways will see and may subscribe to any tags that are in their Virtual core OPC server. Furthermore, 'rights' are defined for each of the data items that a user may access via a virtual core OPC server. In the present example the rights that may be granted include Read, Grant & Expose rights. These rights are defined as:
- Grant enables a Data Owner to grant another customer Grant, Expose or Read rights.
- Expose enables a Data Owner to grant another customer Read rights
- Read does not permit a Data Owner to grant rights to another customer

These rights are not exclusive and further rights may be defined and used as is appropriate. For the example defined above with reference to Figure 4, four virtual core OPC servers are defined and their contents are as set out below in Tables 3-6:

**Table 3: Contents of Virtual Core OPC Server 220₁**

| **Global Core OPC Server ID** | **Tag ID** | **Rights** |
|---|---|---|
| Cust1.Platform1.Plant.item.01 | Plant.item.01 | Grant |
| Cust1.Platform1.Plant.item.02 | Plant.item.02 | Grant |
| Cust1.Platform1.Plant.item.03 | Plant.item.03 | Grant |
| Cust1.Platform1.Pump.alpha | Pump.alpha | Grant |
| Cust1.Platform1.Pump.beta | Pump.beta | Grant |
| Cust1.Platform2.Riser.A | Riser.A | Grant |
| Cust1.Platform2.Riser.B | Riser.B | Grant |
| Cust1.Platform2.Riser.C | Riser.C | Grant |

**Table 4: Contents of Virtual Core OPC Server 220₂**

| **Global Core OPC Server ID** | **Tag ID** | **Rights** |
|---|---|---|
| Cust2.NorthSea.Prod | Prod | Grant |
| Cust2.NorthSea.Temp | Temp | Grant |
| Cust2.NorthSea.Pressure | Pressure | Grant |

**Table 5: Contents of Virtual Core OPC Server 220₃**

| **Global Core OPC Server ID** | **Tag ID** | **Rights** |
|---|---|---|
| Cust1.Platform1.Plant.item.01 | Plant.item.01 | Read |
| Cust1.Platform1.Plant.item.02 | Plant.item.02 | Read |
| Cust1.Platform1.Plant.item.03 | Plant.item.03 | Read |
| Cust1.Platform2.Riser.A | Riser.A | Grant |
| Cust1.Platform2.Riser.B | Riser.B | Grant |
| Cust2.NorthSea.Prod | Prod | Expose |

**Table 6: Contents of Virtual Core OPC Server 220₄**

| **Global Core OPC Server ID** | **Tag ID** | **Rights** |
|---|---|---|
| Cust1.Platform2.Riser.A | Riser.A | Read |
| Cust1.Platform2.Riser.B | Riser.B | Read |
| Cust2.NorthSea.Prod | Prod | Read |

It can be seen from Table 3 that the owner of the data from Platform1 & Platform2 (referred to as Cust1) has Grant rights over all of the tags from Cust1, which means that other rights may be assigned to other organisations. Tables 5 & 6 show that other organisations have been permitted 'read' or 'grant' rights over tags from Cust1. Similarly, the data owner referred to as Cust2 has granted Cust3 'expose' rights over the Cust2.NorthSea.Prod tag. Thus, it can be seen that access to the data tags can be managed in a hierarchical manner.

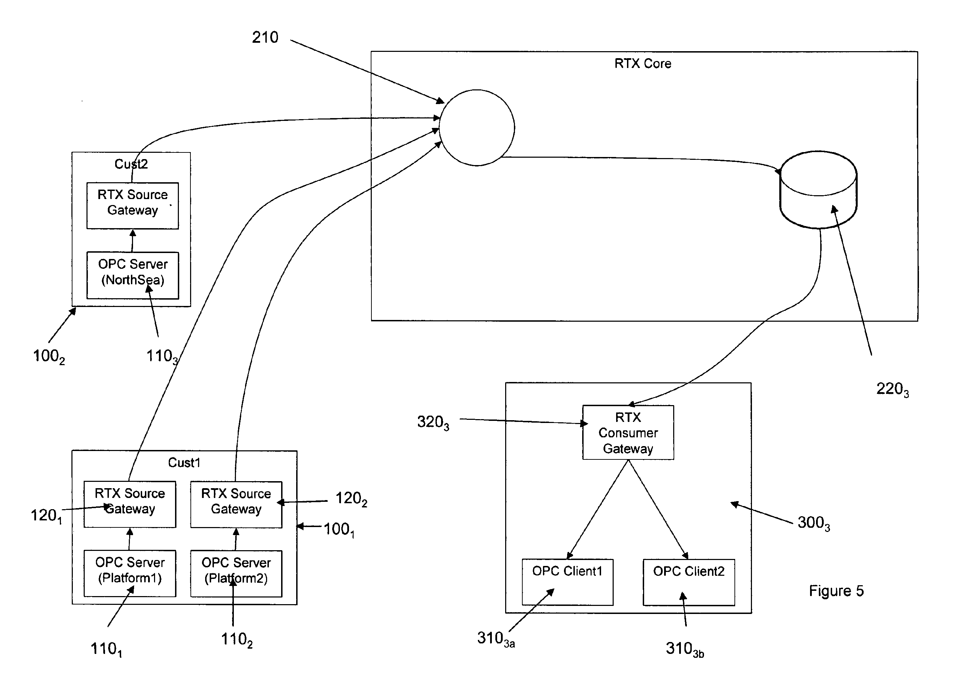

Figure 5 shows a schematic depiction of the process by which OPC clients can subscribe to the data held in an associated virtual core OPC server. Figure 5 is similar to Figure 4, showing first source domain 100₁, comprising first and second OPC servers 110₁ & 110₂ Platform1 & Platform2 and first and second source gateways 120₁ 120₂, and second source domain 100₂ comprising a third OPC server 110₃ NorthSea and a third source gateway 120₃: the NorthSea OPC server 110₃ is in communication with the third source gateway 120₃. The OPC servers are in communication with the global core OPC server 210, from which is extracted virtual core OPC server 220₃. A consumer domain 300₃ comprises first and second OPC Clients 310₃ₐ & 310_{3b} which are in communication with consumer gateway 320₃. The consumer gateway 320₃ is in communication with both the global core OPC server 210 and the virtual core OPC server 220₃. Table 5 above shows the tags that may be accessed from the virtual core OPC server 220₃ by either the first or the second OPC Clients 310₃ₐ & 310_{3b}. The OPC servers periodically transmit data updates to the global core OPC server; these data updates are then reflected in the associated virtual core OPC servers.

The first and second OPC Clients 310₃ₐ & 310_{3b} subscribe to one or more tags in order that the data provided by the tags can be used in a monitoring or management application. The identity of the tags for which a subscription is required is passed to the consumer gateway by each of the OPC clients. For the sake of illustration only, consider Table 7 below:

**Table 7: Data Tags requested by OPC clients**

| **OPC Client** | **Global Core OPC Server ID** | **Frequency** **(ms)** |
|---|---|---|
| First OPC Client 3103ₐ | Cust1.Platform1.Plant.item.01 | 5000 |
| | Cust1.Platform2.Riser.A | 5000 |
| Second OPC Client 310_{3b} | Cust1.Platform1.Plant.item.01 | 10000 |
| | Cust2.NorthSea.Prod | 10000 |

Table 7 shows the data tags that are requested by the first and second OPC Clients 310₃ₐ & 310_{3b}. It can be seen from reference to Figure 5 that all of these data tags are held in Virtual OPC Server 220₃ and thus the subscription requests are valid. The consumer gateway 320₃ receives the subscription requests and analyses the requests to determine whether they can be optimised. It can be seen from Table 7 that both the first and second OPC clients have requested data from Cust1.Platform1.Plant.item.01 so only a single request needs to be sent to the global core OPC server. Table 8 below shows the request that is sent to the global core OPC server by the consumer gateway:

**Table 8: Data Tags requested by consumer gateway**

| **Global Core OPC Server ID** | **Frequency** **(ms)** |
|---|---|
| Cust1.Platform1.Plant.item.01 | 5000 |
| Cust1.Platform2.Riser.A | 5000 |
| Cust2.NorthSea.Prod | 10000 |

It will be understood that by requesting data from Cust1.Platform1.Plant.item.01 every 5000 ms it is possible for the second OPC client to receive data at a frequency of 10000 ms by accessing every other data sample. The global core OPC server then forwards this data to the relevant source gateways such that a data values is provided at the appropriate frequency. These data values are written to the global core OPC server such that the data may be accessed by the consumer gateway from the appropriate virtual core OPC server. The data is then forwarded to the OPC client that requested the data.

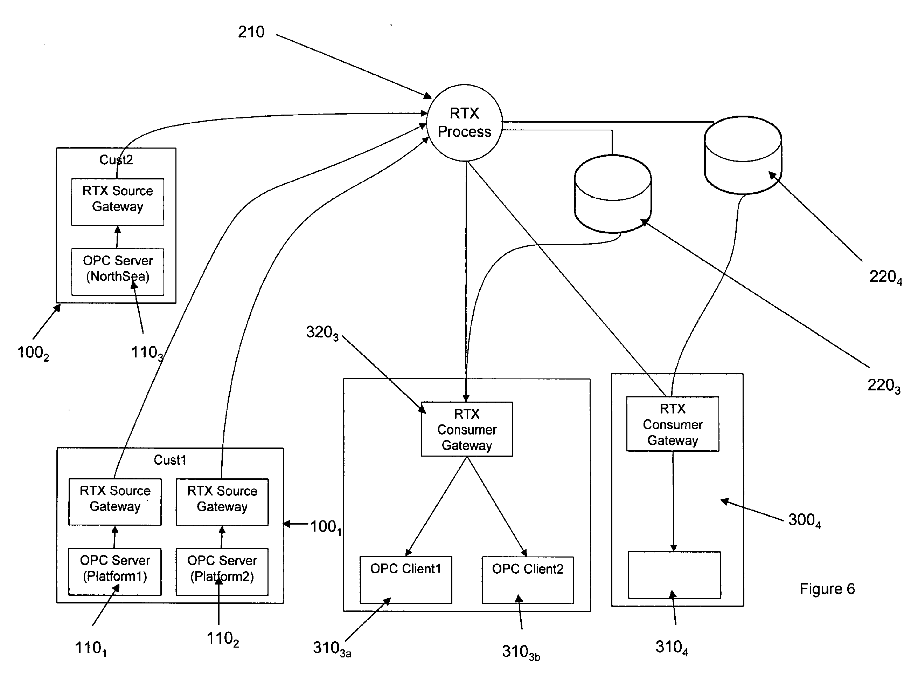

Figure 6 shows a schematic depiction of how the process described above with reference to Figure 5 can be updated. Figure 6 shows the addition of a further consumer domain 300₄, which comprises a consumer gateway 320₄ and a third OPC client 310₄. The third OPC client requests data from Cust1.Platform1.Plant.item.01 at a frequency of 1000 ms and from Cust1.Platform2.Riser.A at a frequency of 8000 ms. It can be seen from Table 6 that these tags are held in virtual core OPC server 220₄ and thus the request is a valid one. The consumer gateway thus sends theses requests to the global core OPC server.

The global core server can optimise these requests by sending a single request to Cust1.Platform1.Plant.item.01 with a frequency of 1000 ms. It can be seen that the other requests for data at frequencies of 5000 & 10000 ms can be satisfied by accessing every fifth and tenth update respectively. However, the global core OPC server must send two requests to Cust1.Platform2.Riser.A, one for an update every 5000 ms and one for an update every 8000 ms.

Figure 2 shows that an ad hoc data consumer may be in communication with the core platform. An ad hoc data consumer may be granted the rights to view data from one or more OPC servers but in a situation where there is not the need and/or requirement to create a new consumer domain. For example, and with reference to Figure 4, an ad hoc consumer may be granted the rights to read all of the tags provided by the OPC server NorthSea 110₃ by the operator of NorthSea by the creation of appropriate tag subscriptions. This data is collected at the required frequency and stored in the appropriate virtual core OPC. The ad hoc consumer will be provided with a secure connection to the core platform such that a connection can be made to the appropriate virtual core OPC and the stored data tags retrieved. The connection is preferably made using a secure technique, for example a token based connection or using out-of-band authentication. It will be understood that an ad hoc consumer may represent a group of potential users who are managed by or in some relationship with the operator of the OPC server that has been exposed to the ad hoc consumer.

The present invention is of great application in the oil and as industries but it will be understood that it could be used in any other industry or technical application where it is necessary, or desired, to share data between a number of different organisations. It should also be understood that the invention may be of use in applications which use data protocols other than OPC.

It will be understood that the present invention will be implemented as a program or software component that will be executed by a computer. Software implementing a method according to the present invention may be supplied on physical media (such as a USB drive, CD-ROM, DVD, etc) or supplied or made available for transfer or download via a communications network.

## Claims

1. A data network comprising one or more data producing domains, one or more data consuming domains and a core platform,
the or each data producing domains comprising one or more data servers and the or each data server being in communication with one or more data sources;
the or each data consuming domains comprising one or more data clients:
the core platform comprising a global data server and one or more virtual data servers wherein;
i) the global data server and the or each virtual data servers being in communication with the or each data producing domains and the or each data consuming domains; and
ii): the or each virtual data server is associated with one of the or each data consuming domains; wherein, in use,
a) data from the one or more data servers are transmitted to the global data server;
b) selected data subsets from the global data server are written to the or each virtual data server; and
c) each data client can access the data held in the virtual data server associated with the respective data consuming domain.

2. A data network according to Claim 1, wherein the one or more servers comprise OPC servers and the one or more data sources comprise OPC compliant data sources.

3. A data network according to Claim 1 or Claim 2, wherein the one or more data clients comprise OPC clients.

4. A data network according to any of Claims 1 to 3, wherein each of the global data server and the or each virtual data servers comprise an OPC server.

5. A data network according to any of Claims 1 to 4, wherein each of the one or more data producing domains further comprises a gateway wherein, in use, communications from the data servers to the global data server is made via the gateway.

6. A data network according to any of Claims 1 to 5, wherein each of the one or more data consuming domains further comprises a gateway wherein, in use, communications from the associated virtual data server to the data clients is made via the gateway.

7. A data network according to any of Claims 1 to 6, wherein each of the one or more data producing domains further comprises a data manager, the data manager, in use, being in communication with the core platform.

8. A data network according to any of Claims 1 to 7, wherein each of the one or more data consuming domains further comprises a data manager, the data manager, in use, being in communication with the core platform.

9. A data network according to any of Claims 1 to 8, wherein a request for data from a data client can be forwarded to an appropriate data server, via the core platform.

10. A data network according to Claim 9, wherein a request for data may comprise the time period after which the data value is updated.

11. A method of operating a data network, the data network comprising one or more data producing domains, one or more data consuming domains and a core platform, wherein the or each data producing domains comprise one or more data servers and the or each data server are in communication with one or more data sources; the or each data consuming domains comprise one or more data clients and
the core platform comprising a global data server and one or more virtual data servers
i) the global data server and the or each virtual data servers are in communication with the or each data producing domains and the or each data consuming domains; and
ii): the or each virtual data server is associated with one of the or each data consuming domains; the method comprising the steps of:
a) transmitting data from one or more of the data servers to the global data server;
b) writing selected data subsets from the global data server to the or each virtual data server; and
c) enabling each data client to access the data held in the virtual data server associated with the respective data consuming domain.

12. A computer program product, comprising computer executable code for performing a method according to Claim 11.
